# EUROPEAN PATENT SPECIFICATION

(11) **EP 2 053 259 B1**
(45) Date of publication and mention of the grant of the patent: **23.01.2013**
(21) Application number: 08253463.7
(22) Date of filing: 24.10.2008
(51) Int. Cl.: F16D 23/12

(54) **Clutch operation assisting device**
Hilfsvorrichtung zur Betätigung einer Kupplung
Dispositif d'assistance d'opération d'embrayage

(30) Priority: 26.10.2007 JP 2007278621; 08.01.2008 JP 2008001582
(43) Date of publication of application: 29.04.2009
(73) Proprietor: Yamaha Hatsudoki Kabushiki Kaisha, Iwata-shi, Shizuoka 438-8501 (JP)
(72) Inventor: Oishi, Akifumi c/o Yamaha Hatsudoki K.K., Shizuoka-ken 438-8501 (JP); Murayama, Takuji c/o Yamaha Hatsudoki K.K., Shizuoka-ken 438-8501 (JP)
(74) Representative: Moreland, David

(56) References cited:
- EP-A1- 1 911 987
- EP-A2- 1 498 346
- DE-A1- 19 611 183
- JP-A- 7 132 872
- JP-A- 55 094 028

## Description

### FIELD OF THE INVENTION

The present invention relates to a clutch operation-assisting device for reducing the operation force of a friction clutch when torque transmission is disengaged by the friction clutch, and relates to a power unit and a straddle type vehicle including the same.

### BACKGROUND TO THE INVENTION

Power units for motorcycles, for example, include a friction clutch for engaging and disengaging torque from an engine to a transmission. The friction clutch has a clutch shaft, and a friction plate and a clutch plate that contact each other in the shaft direction of the clutch shaft (hereinafter, referred to as clutch shaft direction). Also, the friction clutch includes a pressure plate that engages the friction plate and the clutch plate, and a clutch spring that urges the pressure plate. Under normal conditions, the friction clutch is maintained in a clutch-in state that allows torque transmission by the clutch spring.

The friction clutch has a clutch release mechanism. The clutch release mechanism is provided for releasing pressure on the pressure plate caused by the clutch spring. The clutch release mechanism is connected to a clutch lever through a clutch wire. Therefore, when a rider grasps the clutch lever, the pressure plate slides against the urging force of the clutch spring, and torque transmission from the friction plate to the clutch plate is disengaged.

In a high-powered and high-speed type engine, it is desirable that an attachment load of the clutch spring be set high in order to increase a torque capacity. However, it is typically intended for clutch lever operation to be performed by a human hand, and as such if an attachment load of the clutch spring is set high, the burden of operating the clutch lever is increased.

As a means to solve this, clutch operation-assisting devices that have an assist mechanism for reducing operation force of the clutch lever in a clutch release mechanism to which the clutch wire is connected are known. Such operation assist devices are known from, for example, JP-A-Hei 7-132872 and JP-A-Sho 55-94028, described below.

The clutch operation-assisting device disclosed in JP-A-Hei 7-132872 is disposed at the outside of the power unit. On the other hand, some arrangements require the clutch operation-assisting device to be disposed at the inside of the power unit. JP-A-Sho 55-94028, described below, discloses an arrangement in which the clutch operation-assisting device is disposed at the inside of the power unit.

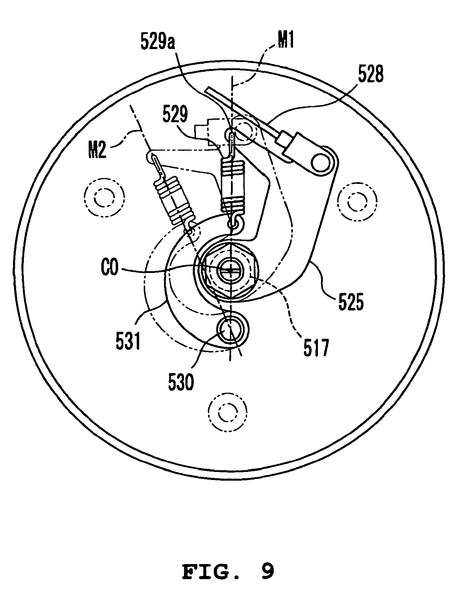

As shown in FIG. 9, the clutch operation-assisting device disclosed in JP-A-Sho 55-94028 includes a rotatable push lever 525 connected to a clutch wire 528, and an assisting spring 529 that reduces the operation force of the clutch lever. One end 529a of the assisting spring 529 is connected to the push lever 525, and the other end of the assisting spring 529 is connected to a communication member 531 formed in the arc shape. The push lever 525 is fixed to a push screw 517 located on the same straight line (on the straight line extending in the direction from the face to the reverse side of paper of the FIG. 9) as the clutch shaft. The push lever 525 rotates together with the push screw 517. On the other hand, the communication member 531 is rotatably supported to a pin 530, and rotates about the pin 530.

When the clutch lever is in a so-called play state (in other words, in a state where no load is applied when the clutch lever is pulled), the assisting spring 529 locates on a straight line M1 that connects a rotation center CO of the push lever 525 and the pin 530, as shown in FIG. 9. In other words, the extension direction passes through the rotation center CO of the push lever 525. Therefore, urging force of the assisting spring 529 does not function as a force to rotate the push lever 525.

On the other hand, as indicated by a chain double-dashed line in FIG. 9, when the clutch lever is pulled, the push lever 525 is dragged and rotates counterclockwise. As a result, the position of the assisting spring 529 changes, and the extension direction M2 of the assisting spring 529 deviates from the rotation center CO of the push lever 525. Accordingly, part of urging force of the assisting spring 529 functions as a force to rotate the push lever 525 counterclockwise. Therefore, urging force of the assisting spring 529 functions as an assisting force in pulling the clutch lever, and operation force of the clutch lever is reduced.

In this way, in the clutch operation-assisting device described above, the assisting spring 529 changes the position as it transitions from the initial position where the clutch lever is in a play state to the disengagement position where the friction clutch is disengaged. In the initial location, the extension direction M1 of the assisting spring 529 passes through a shaft center (=rotation center CO) of the push screw 517. Therefore, in the clutch operation-assisting device described above, the assisting spring 529 must be disposed along the radial direction from the shaft center of the push screw 517, and it is difficult to sufficiently maintain an installation space for the assisting spring 529. Also, it is difficult to sufficiently maintain the extension length of the assisting spring 529. Therefore, in the clutch operation-assisting device described above, the power unit must be upsized in order to sufficiently maintain the installation space for the assisting spring 529.

This invention is made in view of the above points, and an object of the invention is to downsize the power unit that has the built-in clutch operation-assisting device.

### SUMMARY OF THE INVENTION

According to a first aspect of the present invention there is provided a clutch operation-assisting device adapted to be positioned between a clutch operating element and a friction clutch having a pressure plate and a clutch spring for urging the pressure plate towards an engaged configuration, the clutch operation-assisting device comprising:
a sliding member adapted to rotatably support the pressure plate and slide in a predetermined direction together with the pressure plate;
a first rotation member adapted to be coupled to the clutch operating element via a transmission member, wherein the first rotation member rotates in accordance with the transmission member to cause the sliding member to slide;
a support plate that rotatably supports the first rotation member;
an elastic member adapted to apply an urging force along a line of expansion/contraction on the first rotation member,
   wherein the expansion/contraction direction of the elastic member does not pass through a rotation center of the pressure plate;
a second rotation member arranged to transmit the urging force of the elastic member to the first rotation member; and
a bearing member supported by the support plate, and arranged to rotatably support the second rotation member.

The bearing member and support plate may be integrally formed. The bearing member and support plate may be separately formed.

Said device may be adapted to be housed in a casing of a power unit. The casing may have a cover that covers the first rotation member, the support plate, the elastic member, and the bearing member from the outside.

The first rotation member may have a rotation center part supported by the support plate, and a connection part connected to the second rotation member. Part of the first rotation member may be bent so that the connection part is located more inside than the rotation center part.

The bearing member may support the second rotation member from the outside.

The bearing member may comprise a ball bearing.

According to a second aspect of the present invention there is provided a power unit for a vehicle comprising:
a friction clutch having a pressure plate and a clutch spring for urging the pressure plate, wherein the friction clutch is connected via a transmission member to an operation element;
a sliding member arranged to rotatably support the pressure plate and slide in a predetermined direction together with the pressure plate;
a first rotation member adapted to be coupled to the clutch operating element via a transmission member, wherein the first rotation member rotates in accordance with the transmission member to cause the sliding member to slide;
a support plate that rotatably supports the first rotation member;
an elastic member adapted to apply an urging force along a line of expansion/contraction on the first rotation member,
   wherein the expansion/contraction direction of the elastic member does not pass through a rotation center of the pressure plate;
a second rotation member arranged to transmit the urging force of the auxiliary elastic member to the first rotation member;
a bearing member supported by the support plate and arranged to rotatably support the second rotation member; and
a casing that houses the friction clutch, the sliding member, the first rotation member, the support plate, the elastic member, the second rotation member, and the bearing member.

According to a third aspect of the present invention there is provided a straddle-type vehicle comprising a power unit according to the second aspect.

A clutch operation-assisting device may be disposed in a clutch operation device, and housed in a casing of a power unit, the clutch operation device may include: a friction clutch having a pressure plate and a clutch spring that urges the pressure plate, and arranged in the casing of the power unit; and an operation element that is connected to the friction clutch through a transmission member, and manually operated against urging force of the clutch spring when torque transmission by the friction clutch is disengaged, the clutch operation-assisting device including: a sliding member that rotatably supports the pressure plate and slides in a predetermined direction together with the pressure plate; a first rotation member that is connected to the transmission member and slides the sliding member by rotating along with the transmission member; a support plate that rotatably supports the first rotation member; an auxiliary elastic member that changes an expansion direction and provides urging force to rotate the first rotation member in a direction that disengages the friction clutch, when the operation element is operated in a direction that disengages the friction clutch, while the operation element shifts from a disengagement starting position where the operation element receives counter force of the clutch spring to a disengagement position where disengagement of the friction clutch is completed; the second rotation member that is connected to the auxiliary elastic member and connected to the first rotation member, and transmits urging force of the auxiliary elastic member to the first rotation member by rotation; and a bearing member that is fixed to the support plate or integrally formed in the support plate, and rotatably supports the second rotation member; in which an expansion direction of the auxiliary elastic member does not pass through a rotation center of the pressure plate, as seen from a sliding direction of the sliding member.

According to the clutch operation-assisting device described above, the expansion direction of the auxiliary elastic member does not pass through the rotation center of the pressure plate as seen from the sliding direction of the sliding member. Therefore, the auxiliary elastic member need not be disposed along the radial direction from the rotation center of the pressure plate, as seen from the sliding direction. Therefore, the auxiliary elastic member can be disposed without restriction of the sliding member. Thus, an installation space for the auxiliary elastic member can be largely maintained without upsizing the power unit itself. Also, a space for the auxiliary elastic member to expand or contract can be largely maintained. As a result, the power unit can be downsized.

According to the clutch operation-assisting device described above, the second rotation member is fixed to the support plate or supported by the integrated bearing member. Therefore, the second rotation member is stably supported. Also, positioning accuracy for installing the second rotation member is improved. Therefore, transmission of force from the auxiliary elastic member through the second rotation member to the first rotation member goes smoothly, and also operation of the operation element by an operator goes smoothly.

As described above, according to the present invention, the power unit that has the built-in clutch operation-assisting device can be downsized.

### BRIEF DESCRIPTION OF THE DRAWINGS

These and other aspects of the present invention will now be described, by way of example only, with reference to the accompanying drawings, in which:
FIG. 1 is a left side view representing a portion of a motorcycle;
FIG. 2 is a sectional view illustrating a portion of a power unit in a cut-across way;
FIG. 3 is a sectional view of a clutch operation-assisting device;
FIG. 4(a) is a front view of a first rotation plate;
FIG. 4(b) is a front view of a cam plate;
FIG. 5 is a drawing that represents a clutch operation-assisting device while a clutch lever is in a returning position, wherein FIG. 5 (a) is a side view and FIG. 5(b) is a sectional view;
FIG. 6 is a drawing that represents a clutch operation-assisting device while a clutch lever is in a disengagement starting position, wherein FIG. 6 (a) is a side view and FIG. 6(b) is a sectional view;
FIG. 7 is a drawing that represents a clutch operation-assisting device while a clutch lever is in a disengagement position, wherein FIG. 7 (a) is a side view and FIG. 7(b) is a sectional view;
FIG. 8 is a side view of a countervailing spring unit in a clutch operation-assisting device while a clutch lever is in a returning position; and
FIG. 9 is a side view of a conventional clutch operation-assisting device.

### DETAILED DESCRIPTION OF THE DRAWINGS

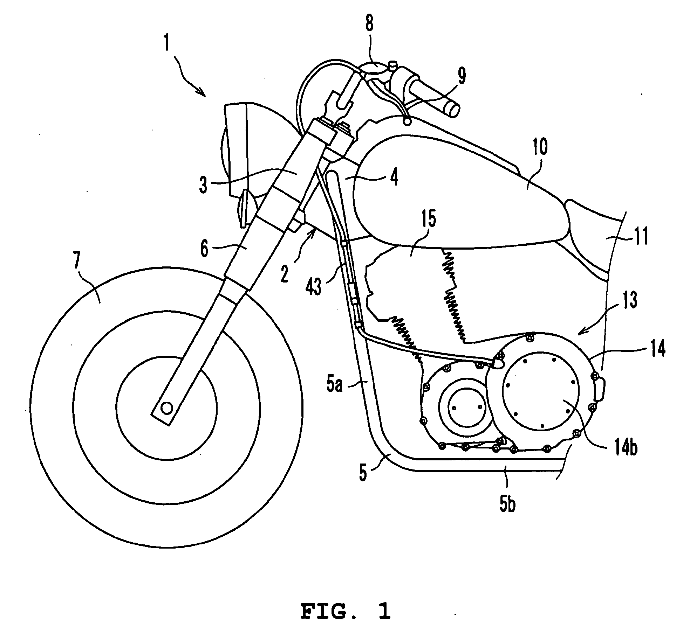

The motorcycle 1 shown in FIG.1 includes a frame 2. The frame 2 has a steering head pipe 3, a mainframe member 4, and a down tube 5. The steering head pipe 3 supports a front fork 6. A steering handle 8 that steers a front wheel 7 is fixed on the upper end of the front fork 6. The clutch lever 9 as an example of an operation element is attached to the left end part of the steering handle 8.

The main frame member 4 extends backwards from the steering head pipe 3, and supports a fuel tank 10 and a seat 11. The down tube 5 has: a first portion 5a that extends downwards from the front end of the main frame member 4; and a second portion 5b that extends backwards from the lower end of the first portion 5a.

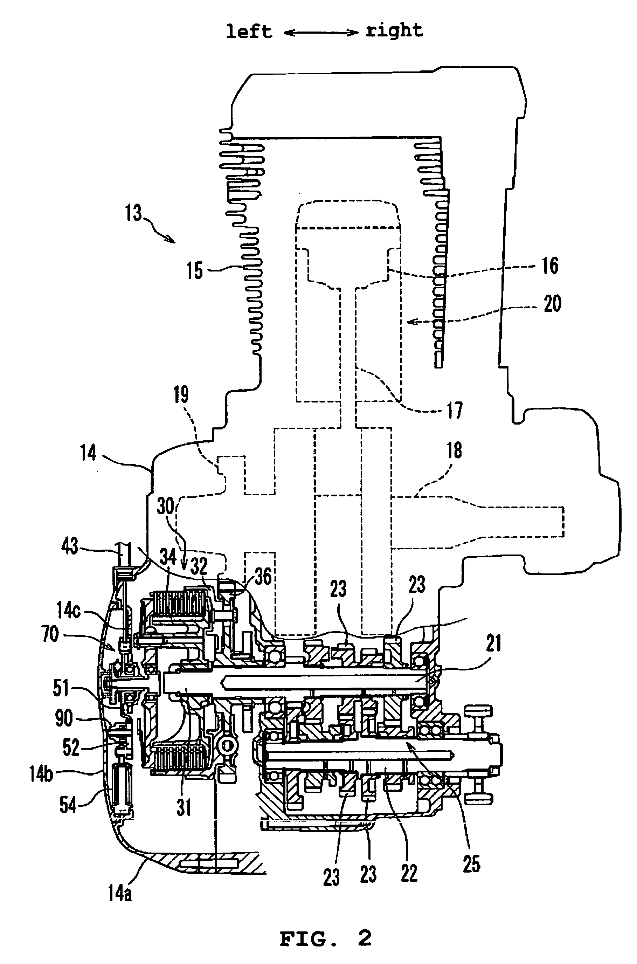

A power unit 13 is supported by the frame 2. The power unit 13 has a crankcase 14 and a cylinder 15. As described later, the friction clutch 30 (refer to FIG. 2) is housed in the crankcase 14. The clutch lever 9 and the friction clutch 30 are connected through the clutch wire 43. In the example embodiment shown, the clutch lever 9, the clutch wire 43, and the friction clutch 30 constitute a clutch operation device that manually engages or disengages the transmission of torque in the power unit 13.

As shown in FIG. 2, the engine 20 is disposed in the power unit 13. The engine 20 includes a piston 16, a crankshaft 18, and a connecting rod 17 that connects the piston 16 and the crankshaft 18. A main shaft 21 and a drive shaft 22 are arranged in parallel with the crankshaft 18 in the crankcase 14. A plurality of gears 23 are disposed around the main shaft 21 and the drive shaft 22. The transmission 25 is formed by the main shaft 21, the drive shaft 22, and the gear 23.

The friction clutch 30 is disposed at the left end of the main shaft 21. Hereinafter, for convenience, a portion of the main shaft 21 where the friction clutch 30 is disposed is referred to as "clutch shaft 31." In this embodiment, the clutch shaft 31 is part of the main shaft 21. The clutch shaft 31 and the main shaft 21 are formed integrally.

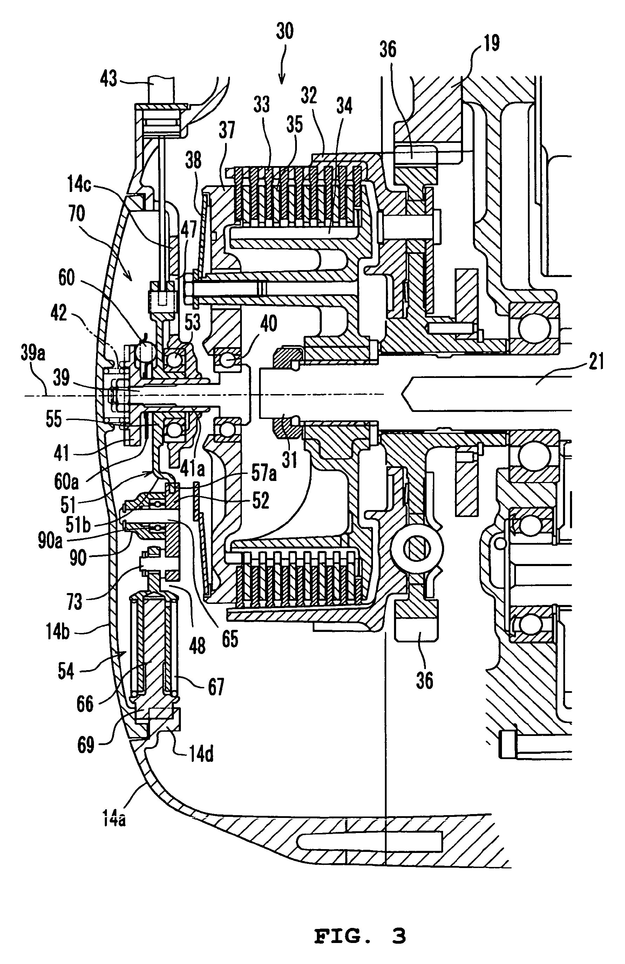

As shown in FIG. 3, the friction clutch 30 in this embodiment is the friction clutch of a wet multi plate type. However, the friction clutch according to the present invention is not limited to the friction clutch of a wet multi plate type. The friction clutch 30 includes a clutch housing 32 and a clutch boss 34. The clutch housing 32 is rotatably supported by the clutch shaft 31. The clutch boss 34 is supported by the clutch shaft 31 so as to rotate together with the clutch shaft 31.

A plurality of friction plates 33 are disposed in the clutch housing 32, and a plurality of clutch plates 35 are disposed at the clutch boss 34. The friction plates 33 and the clutch plates 35 are arranged alternately along the shaft direction (right and left direction) of the clutch shaft 31.

As shown in FIG. 2, a drive gear 19 is fixed to the left end of the crankshaft 18. A driven gear 36 is fixed to the clutch housing 32. The drive gear 19 and the driven gear 36 are engaged, and the driven gear 36 rotates in accordance with the drive gear 19. Therefore, the clutch housing 32 rotates in accordance with the crankshaft 18. The drive gear 19 and the driven gear 36 constitute a speed reduction mechanism.

As shown in FIG. 3, the pressure plate 37 is disposed at the left side of the clutch shaft 31. A clutch spring 38 made with a diaphragm spring is attached to the pressure plate 37. Here, the clutch spring 38 is not limited to a specific kind. The pressure plate 37 is slidable in the shaft direction of the clutch shaft 31, and urged to the clutch boss 34 side (right side in FIG. 3) at all times by the clutch spring 38. When the pressure plate 37 moves to the clutch boss 34 side and presses the friction plate 33, the friction plate 33 and the clutch plate 35 are press-fit, and the friction clutch 30 is set in an engagement state (clutch-in state). On the other hand, when the pressure plate 37 separates from the clutch boss 34, engagement between the friction plate 33 and the clutch plate 35 is released, and the friction clutch 30 is set in a disengagement state (clutch-out state).

The crankcase 14 includes: a case body 14a that has the support plate 14c; and a clutch cover 14b. The support plate 14c is arranged at the outside (left side) of the pressure plate 37. The clutch cover 14b is arranged at the outside of the support plate 14c. The clutch cover 14b covers the support plate 14c and the friction clutch 30 from the outside. The clutch cover 14b also covers the clutch operation-assisting device 70 described later.

A push shaft 39 is supported by the support plate 14c. The push shaft 39 is arranged on the same straight line as the clutch shaft 31, and arranged further outside (left side) of the clutch shaft 31. The pressure plate 37 is rotatably supported by the push shaft 39 through a bearing 40. The pressure plate 37 is unable to move in the shaft direction against the push shaft 39, but slides in the shaft direction in accordance with the push shaft 39. A phantom line 39a in FIG. 3 is a rotation center line of the push shaft 39. The phantom line 39a is also a rotation center line of the pressure plate 37.

A cam plate 41 is attached to the left end of the push shaft 39. In this embodiment, the push shaft 39 and the cam plate 41 are formed by different members. However, the push shaft 39 and the cam plate 41 may be formed integrally. That is, part of the push shaft 39 may form the cam plate 41. In the present embodiment, the cam plate 41 has a boss part 41a, and the push shaft 39 is fit to the boss part 41a. A compression coil spring 42 is arranged between the left side of the cam plate 41 and the clutch cover 14b. The cam plate 41 is constantly urged in the right direction by the compression coil spring 42. The compression coil spring 42 is not necessarily required. As described later, the cam plate 41, the ball 60, and the first rotation plate 51 constitute a so-called cam mechanism of ball cam type.

However, the compression coil spring 42, which urges the cam plate 41 in the right direction, is not necessary as long as it functions as a cam mechanism.

The boss part 41a of the cam plate 41 passes through a center hole of a first rotation plate 51. The boss part 41a of the cam plate 41 can move in the shaft direction in relation to the first rotation plate 51. The first rotation plate 51 is rotatably supported by the support plate 14c through a bearing 53.

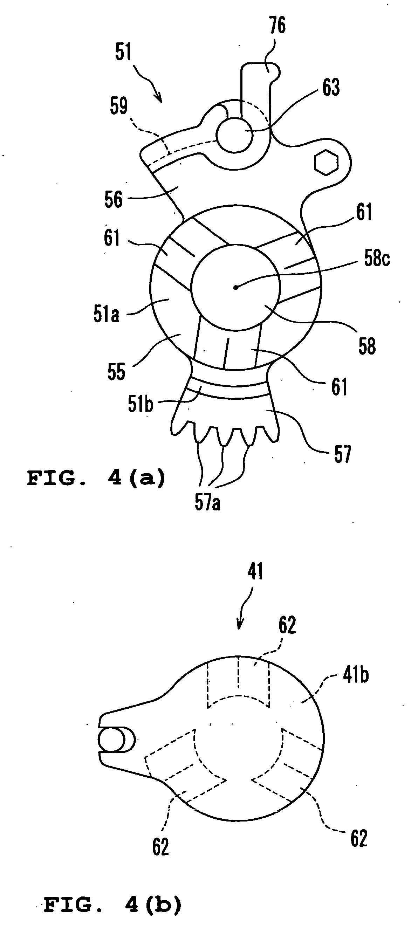

As shown in FIG. 4(a), three cam grooves 61 are arranged on the periphery of the surface (left side surface in FIG. 3) 51a of the first rotation plate 51. On the other hand, as shown in FIG. 4 (b), similar cam grooves 62 are formed in the back surface (right side surface in FIG. 3) 41b of the cam plate 41. These cam grooves 61, 62 are generally in the V shape in cross section. As shown in FIG. 3, a ball 60 is arranged between the cam groove 61 of the first rotation plate 51 and the cam groove 62 of the cam plate 41. Numeral 60a is a plate that prevents the ball 60 from dropping out. A so-called ball cam type of cam mechanism is formed by the cam grooves 61, 62, and the ball 60. That is, when the first rotation plate 51 rotates, the ball 60 moves in the cam grooves 61, 62, and then the cam plate 41 is pushed out to the left side by the ball 60. As a result, the pressure plate 37 slides to the left side together with the push shaft 39, and the friction clutch 30 is set in a disengagement state.

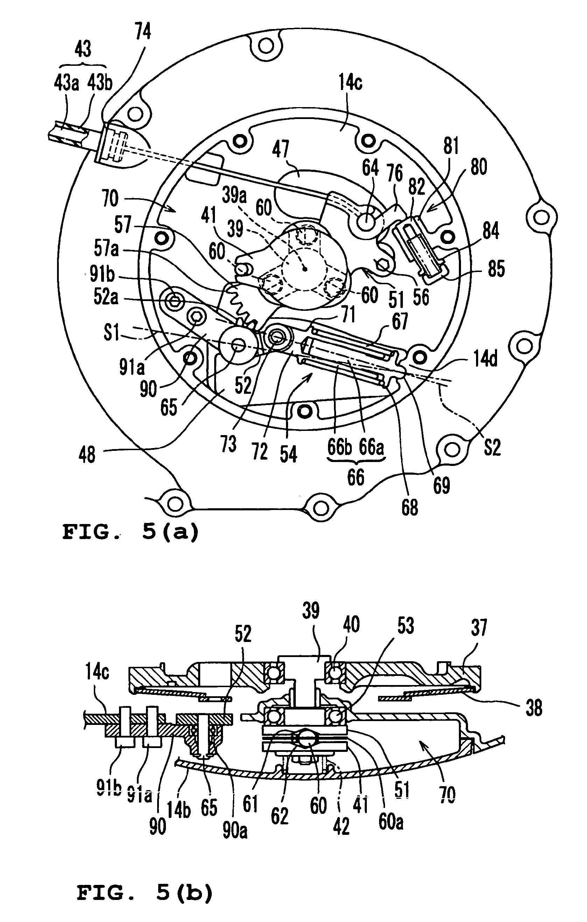

As shown in FIG. 5(a), the clutch wire 43 includes an inner wire 43a made of metal, and an outer tube 43b made of synthetic resin that covers the inner wire 43a. The inner wire 43a is slidably inserted in the outer tube 43b, and being pulled out from the edge part of the outer tube 43b.

The clutch operation-assisting device 70 includes a second rotation plate 52 and a spring unit 54, besides the first rotation plate 51, which is described above. The first rotation plate 51 is constituted by a sheet metal press process part, for example. As shown in FIG. 4 (a), the first rotation plate 51 includes a center part 55 of the generally circle shape, a wire connection part 56, and a gear part 57. The wire connection part 56 and the gear part 57 are located on opposite sides while having the center part 55 in between. As shown in FIG. 3 and FIG. 4(a), the first rotation plate 51 is bent toward the inside in the clutch shaft direction (right side in FIG. 3) at a place 51b between the center part 44 and the gear part 57.

A hole 58, through which the push shaft 39 is inserted, is formed at the center part 55. The cam groove 61 is arranged on the periphery of the hole 58 of the center part 55. An engagement groove 59 and an engagement hole 63 are formed at the wire connection part 56. The engagement groove 59 is a portion around which the inner wire 43a of the clutch wire 43 is wound. The engagement groove 59 curves like a circle whose center is the center 58c of the hole 58. The engagement groove 59 is formed generally in the U shape in cross section, which opens upwards. As shown in FIG. 5(a), an engagement element 64 in the shape of a column, which is fixed at the tip of the inner wire 43a, is hooked into the engagement hole 63. According to this constitution, when the inner wire 43a is pulled, the first rotation plate 51 rotates counterclockwise around the push shaft 39 as the center.

As shown in FIG. 5(b), a bearing member 90 is fixed to the support plate 14c. A fixing method for the bearing member 90 is not limited specifically. However, in the present embodiment, the bearing member 90 is fixed to the support plate 14c by bolts 91a, 91b. Instead of the bolts 91a, 91b, fasters such as screws may be used, for example. The bearing member 90 may be fixed to the support plate 14c by jointing. The bearing member 90 may be formed integrally on the support plate 14c. That is, the bearing member 90 may be a separate unit from the support plate 14c, or may be formed with the support plate 14c as a single unit. The bearing member 90 supports the second rotation plate 52. The second rotation plate 52 is constituted so as to rotate about a pivot shaft 65 that is a rotation center of the bearing member 90.

As shown in FIG. 5(a), teeth 52a are formed on the second rotation plate 52. The teeth 52a of the second rotation plate 52 are engaged with teeth 57a of the gear part 57 of the first rotation plate 51. The first rotation plate 51 and the second rotation plate 52 are connected so as to transmit the torque from one to another by the teeth 52a, 57a. Therefore, the second rotation plate 52 rotates in accordance with the first rotation plate 51 (refer to FIG. 5(a)).

The bearing member 90 includes a bearing 90a made with a ball bearing. However, the bearing 90a of the bearing member 90 does not have to be a ball bearing, but may be any type of roller bearing. The shape and structure are not limited to a roller bearing, as long as the mechanism allows the rotation of the second rotation plate 52 that has the pivot shaft 65 as a rotation center.

The distance between the rotation center (shaft center 39a of the push shaft 39) of the first rotation plate 51 and the teeth 57a is longer than the distance between the rotation center (shaft center of the pivot shaft 65) of the second rotation plate 52 and the teeth 52a. Therefore, the first rotation plate 51 and the second rotation plate 52 are connected in a way that a turning angle of the second rotation plate 52 is larger than a turning angle of the first rotation plate 51.

The spring unit 54 includes a spring holder 66 and an auxiliary spring 67. The spring holder 66 is constituted by an inner tube 66a and an outer tube 66b. The inner tube 66a and the outer tube 66b are slidably fit in the shaft direction. The outer tube 66b slides in relation to the inner tube 66a so that the spring holder 66 can be stretched compressed or contract.

The inner tube 66a has a spring retainer 68 and a support end 69. The spring retainer 68 juts out in the shape of a flange from an outer peripheral surface of one end of the inner tube 66a. The support end 69 is formed at one end of the inner tube 66a, and rotatably supported by a mounting seat 14d of the support plate 14c.

The outer tube 66b has the spring retainer 71 and a connection end 72. The spring retainer 71 juts out in the shape of a flange from an outer peripheral surface of one end of the outer tube 66b. The connection end 72 is formed at one end of the outer tube 66b, and rotatably connected to one end of the second rotation plate 52 through a pin 73.

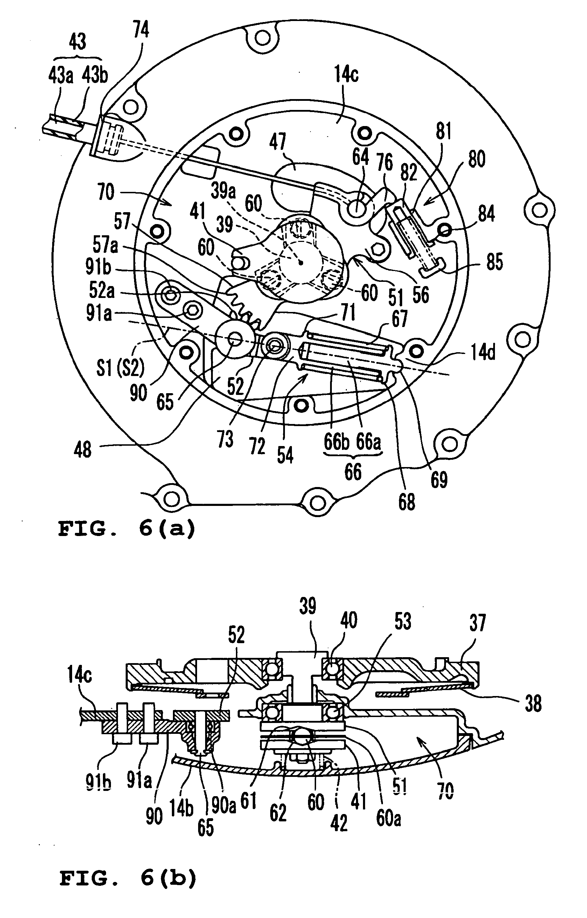

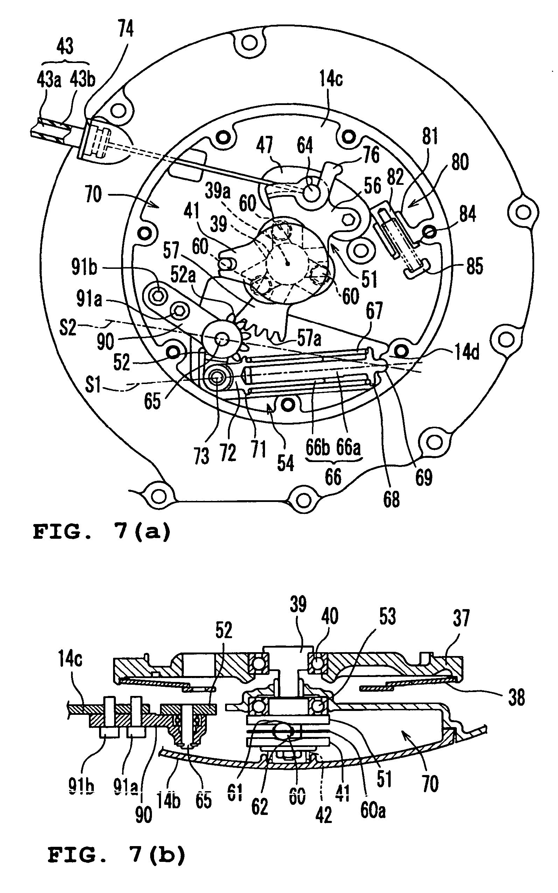

The auxiliary spring 67 is a compression coil spring. The auxiliary spring 67 is set between the spring retainer 68 of the inner tube 66a and the spring retainer 71 of the outer tube 66b, in a compressed state. Therefore, the spring holder 66 is urged in the extending direction at all times. The auxiliary spring 67 changes the extension direction S2 with the support end 69 as a pivot while shifting from a returning position (refer to FIG. 5(a)) through a disengagement starting position (refer to FIG. 6(a)) to a disengagement position (refer to FIG. 7(a)), which are described later. However, the extension direction S2 of the auxiliary spring 67 and the shaft center 39a of the push shaft 39 do not cross at any place, as seen from the shaft direction of the push shaft 39.

A wire introduction port 74 is formed at the case body 14a of the crankcase 14. The clutch wire 43 is inserted in the wire introduction port 74. The inner wire 43a of the clutch wire 43 is introduced in the crankcase 14 through the wire introduction port 74, and connected to the wire connection part 56 of the first rotation plate 51.

The support plate 14c is provided with a first hole 47 and a second hole 48 in addition to a hole, to which the push shaft 39 is inserted. The first hole 47 and the second hole 48 are located opposite from each other with the shaft center 39a of the push shaft 39 in between. Part of the wire connection part 56 of the first rotation plate 51 is located in the first hole 47 (refer to FIG. 3). Part of the second rotation plate 52 and the spring unit 54 are located in the second hole 48 (refer to FIG. 3).

The clutch lever 9 can rotate between the returning position where the friction clutch 30 maintains a clutch-in state and the disengagement position where the friction clutch 30 is set clutch-off. A predetermined rotation range from the returning position (for example, a rotation range where the moving distance of the tip of the clutch lever 9 is between 10 and 15 mm) is a so-called play region, in which a clutch-off state is maintained while the clutch lever 9 is grasped. In the play region, operation of the clutch lever 9 pulls the clutch wire 43 only slightly so that urging force of the clutch spring 38 is not transmitted to the clutch lever 9. The very end of play of the clutch lever 9 is the disengagement starting position. In the disengagement starting position, urging force of the clutch spring 38 works on the clutch lever 9 through the clutch wire 43.

FIG. 5 (a) and (b) indicate a state of the clutch operation-assisting device 70 where the clutch lever 9 is in the returning position. When the clutch lever 9 is in the returning position, the pin 73 that connects the second rotation plate 52 and the spring unit 54 is positioned upwards, above a straight line S1 that connects the support end 69 of the spring holder 66 and the pivot shaft 65 of the second rotation plate 52.

When the rider operates the clutch lever 9 from the returning position to the disengagement starting position, the first rotation plate 51 is pulled through the clutch wire 43, and the first rotation plate 51 rotates counterclockwise.
The first rotation plate 51 and the second rotation plate 52 are connected by gear. Thus, the second rotation plate 52 rotates clockwise. On the other hand, the second rotation plate 52 and the spring unit 54 are connected by pin. Thus, the spring unit 54 rotates counterclockwise around the support end 69 as a pivot.

When the clutch lever 9 reaches the disengagement starting position, as shown in FIG. 6(a), the pin 73 is located on the straight line S1 that connects the support end 69 of the spring holder 66 and the pivot shaft 65 of the second rotation plate 52. Therefore, urging force of the auxiliary spring 67 does not function as force to rotate the second rotation plate 52, nor does it work as force to rotate the first rotation plate 51.

When the clutch lever 9 is operated from the disengagement starting position to the disengagement position, the first rotation plate 51 further rotates counterclockwise. Then, as shown in FIG. 7 (b) , the position between the cam groove 61 of the first rotation plate 51 and the cam groove 62 of the cam plate 41 is deviated. Accordingly, the ball 60 moves in both cam grooves 61, 62, and the cam plate 41 is pushed outside. As shown in FIG. 7 (a) , the second rotation plate 52 further rotates clockwise in accordance with the rotation of the first rotation plate 51, then a position of the pin 73 is deviates downwards than the straight line S1. As a result, the spring holder 66 extends by receiving the urging force of the auxiliary spring 67, and the urging force of the auxiliary spring 67 functions as force to rotate the second rotation plate in a clockwise direction. As a result, the urging force of the auxiliary spring 67 functions as assisting force to rotate the first rotation plate 51 in counterclockwise direction.

Therefore, when the clutch lever 9 is operated toward the disengagement position beyond the disengagement starting position, the first rotation plate 51 is forcibly rotated counterclockwise by the auxiliary spring 67. Therefore, urging force of the auxiliary spring 67 is added to the operation force for the rider to grip on the clutch lever 9. Therefore, a rider's load in operating the clutch lever 9 is reduced.

As described above, in a state where the clutch lever 9 is in the returning position, as shown in FIG. 5(a), the position of the pin 73 is positioned above the straight line S1. Therefore, the first rotation plate 51 is pressed in a clockwise direction, that is the opposite direction to the direction that disengages the friction clutch 30, by the urging force of the auxiliary spring 67.

Force that urges the first rotation plate 51 in a clockwise direction becomes an inverse assisting force that counterworks the force that rotates the clutch lever 9 from the returning position to the disengagement starting position. Therefore, if it is left this way, the initial input load, which takes when the clutch is gripped for the first time, increases.

For this reason, a countervailing spring unit 80 that countervails the inverse assisting force is disposed in the clutch operation-assisting device 70 in the present embodiment. In the present embodiment, a housing part 81 that houses the countervailing spring unit 80 is formed in the support plate 14c.

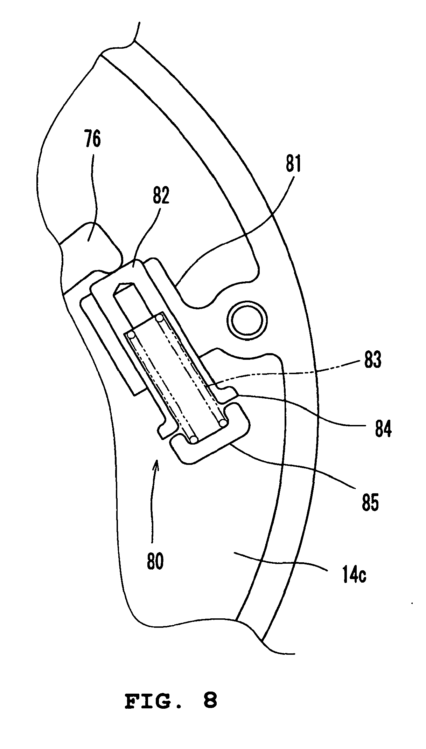

As shown in FIG. 8, the countervailing spring unit 80 has a pressing pin 82 and a countervailing spring 83. A flange-shape stopper 84 is formed at the bottom end of the pressing pin 82. The pressing pin 82 is inserted in the housing part 81 from below.

A spring retainer 85 that supports the bottom end of the countervailing spring 83 is disposed in the support plate 14c. The countervailing spring 83 is a compression coil spring, and is disposed between the upper-end-inner-surface of the pressing pin 82 and the spring retainer 85 in a compression state. The countervailing spring 83 continually biases or urges the pressing pin 82 obliquely upwards along the longitudinal direction of the housing part 81. Urging force of the countervailing spring 83 is set slightly weaker than the inverse assisting force of the auxiliary spring 67.

The pressing pin 82 can move between the first position (refer to FIG. 6(a) and FIG. 7(a)) where the upper end protrudes largely from the housing part 81 and the second position (refer to FIG. 5(a)) where the upper end of the pressing pin 82 protrudes slightly from the housing part 81. In the first position, a stopper 84 of the pressing pin 82 collides or engages with the lower end of the housing part 81 to restrict a position of the pressing pin 82. In the second position, the stopper 84 of the pressing pin 82 collides or engages with the spring retainer 85 to restrict a position of the pressing pin 82.

While the clutch lever 9 shifts from the returning position to the disengagement starting position, the upper end of the pressing pin 82 collides or engages with a contact part 76 of the first rotation plate 51 (refer to FIG. 5(a)). Therefore, the first rotation plate 51 receives urging force of the countervailing spring 83. As a result, when the clutch lever 9 is in a play region, total urging force of the auxiliary spring 67 and the countervailing spring 83, which applies to the first rotation plate 51, becomes almost zero. Thus, rotation of the first rotation plate 51 in a clockwise direction is restricted.

When the clutch lever 9 passes beyond the disengagement starting position and approaches the disengagement position, the contact part 76 of the first rotation plate 51 separates from the upper end of the pressing pin 82 (refer to FIG. 7 (a)). As a result, urging force of the countervailing spring 83 applied to the first rotation plate 51 becomes zero, and the first rotation plate 51 is forcibly rotated counterclockwise by the urging force of the auxiliary spring 67.

As described above, the clutch operation-assisting device 70 according to the present embodiment includes the push shaft 39, the first rotation plate 51, and the auxiliary spring 67. Here, the push shaft 39 rotatably supports the pressure plate 37, and slides in the shaft direction together with the pressure plate 37. The first rotation plate 51 is connected to the clutch wire 43. The first rotation plate 51 slides the push shaft 39 by means of rotation in accordance with the clutch wire 43. The auxiliary spring 67 changes the extension direction S2 and provides the urging force that rotates the first rotation plate 51 in the direction that disengages the friction clutch 30, when the clutch lever 9 is operated in the direction that disengages the friction clutch 30, while the clutch lever 9 shifts from the disengagement starting position where the clutch lever 9 receives counter force of the clutch spring 38 to the disengagement position where disengagement of the friction clutch 30 is completed. The clutch operation-assisting device 70 is constituted in a way that the extension direction S2 of the auxiliary spring 67 does not pass through the shaft center (= rotation center of the pressure plate 37) of the push shaft 39, as seen from the shaft direction of the push shaft 39 (= sliding direction) (refer to FIG. 5).

Therefore, according to the clutch operation-assisting device 70 in the present embodiment, it is not necessary to set the auxiliary spring 67 from the shaft center 39a of the push shaft 39 along the radius direction, so that the auxiliary spring 67 can be set relatively freely without being restricted by the push shaft 39. Therefore, a setting space for the auxiliary spring 67 can be maintained largely without enlarging the crankcase 14 of the power unit 13. As a result, the power unit 13 can be downsized.

Since an extension space for the auxiliary spring 67 can be maintained large, an extension length for the auxiliary spring 67 can be set long. Therefore, without using a particularly expensive spring, sufficient urging force can be attained by keeping an extension length long. Therefore, the clutch operation-assisting device 70 can be reduced in cost.

As shown in FIG. 5 (a) and the like, the clutch operation-assisting device 70 rotates around the pivot shaft 65 as a center, and includes the second rotation plate 52 that transmits the urging force of the auxiliary spring 67 to the first rotation plate 51. As seen from the shaft direction of the push shaft 39, the position of the pivot shaft 65 and the position of the push shaft 39 are deviated.

In this way, according to the clutch operation-assisting device 70, instead of directly connecting the spring unit 54 and the first rotation plate 51, the second rotation plate 52, which provides urging force of the auxiliary spring 67 to the first rotation plate 51, is set between the spring unit 54 and the first rotation plate 51. Therefore, restriction for the setting position of the auxiliary spring 67 is further reduced, and downsizing of the power unit 13 can be promoted.

In the clutch operation-assisting device 70 according to the present embodiment, the bearing member 90 that rotatably supports the second rotation plate 52 is disposed, and the bearing member 90 is fixed to the support plate 14c. Therefore, the second rotation plate 52 can stably be supported. Also, the second rotation plate 52 can be positioned precisely when the clutch operation-assisting device 70 is set. Thus, transmission of the assisting force from the spring unit 54 through the second rotation plate 52 to the first rotation plate 51 is smoothed. As a result, transmission of subtle friction force and the like to the rider's hand that grips on the clutch lever 9 is restrained, so that operation of the clutch lever 9 by the rider is smoothed.

According to the clutch operation-assisting device 70, the second rotation plate 52 is not supported by the clutch cover 14b. Thus, the second rotation plate 52 can rotatably be supported even in a state where the clutch cover 14b is removed. Therefore, it is possible to adjust the clutch operation-assisting device 70 (for example, adjustment of the disengagement starting position) in a state where the clutch cover 14b is removed. Therefore, according to the clutch operation-assisting device 70, maintainability can be improved.

As shown in FIG. 3, according to the clutch operation-assisting device 70, the bearing member 90 supports the second rotation plate 52 from the outside in the clutch shaft direction (left side in FIG. 3). The first rotation plate 51 bends to the inside in the clutch shaft direction (right side in FIG. 3) at the place 51b between the center part 55 and the teeth 57a of the gear part 57. Therefore, the second rotation plate 52 can be arranged more inside. Thus, although the bearing member 90 is arranged between the second rotation plate 52 and the clutch cover 14b, the second rotation plate 52 can be arranged more inside, so the clutch cover 14b can be restrained from protruding outside. In other words, interference between the clutch cover 14b and the bearing member 90 can be avoided without arranging the clutch cover 14b further outside.

In the present embodiment, a bearing 90a of a bearing member 90 is a ball bearing. Therefore, the second rotation plate 52 can be supported more smoothly, and operation of the clutch lever 9 by the rider can be smoother.

In the clutch operation-assisting device 70, the first rotation plate 51 and the second rotation plate 52 are connected in a way that a turning angle of the second rotation plate 52 is larger than a turning angle of the first rotation plate 51.

Therefore, torque is increased when the torque is transmitted from the second rotation plate 52 to the first rotation plate 51. Therefore, urging force necessary for the auxiliary spring 67 can be restrained to be small. As a result, a compact spring can be used. Thus, the auxiliary spring 67 can be downsized or reduced in cost.

In the present embodiment, the first rotation plate 51 includes: a wire connection part 56 connected to the clutch wire 43; and the gear part 57 connected to the second rotation plate 52. The wire connection part 56 and the gear part 57 are located opposite from each other while having the push shaft 39 in between, as seen from the shaft direction of the clutch shaft 31.

Therefore, according to the clutch operation-assisting device 70, the wire connection part 56 and the gear part 57 can be compactly arranged, so that downsizing of the power unit 13 can be promoted.

In the present embodiment, one end of the auxiliary spring 67 (specifically, the support end 69 of the spring holder 66) is swingably supported by the support plate 14c.

Therefore, the auxiliary spring 67 can be swung largely while having the one end of the auxiliary spring 67 as a pivot. Therefore, even if the auxiliary spring 67 is relatively small, sufficiently strong urging force can be exerted. The support plate 14c may directly support the auxiliary spring 67, or may indirectly support the auxiliary spring 67 through other members.

The clutch operation-assisting device 70 according to the present embodiment includes a support plate 14c located between the friction clutch 30 and the first rotation plate 51. The holes 47, 48 are formed in the support plate 14c.

Therefore, according to the clutch operation-assisting device 70, the first rotation plate 51 can firmly be supported by the support plate 14c, and sufficient strength can be maintained. Through the holes 47, 48, lubricating oil can be supplied from the friction clutch 30 side to the first rotation plate 51 side. Therefore, friction of the swing part of the clutch operation-assisting device 70 can be restrained.

According to the clutch operation-assisting device 70, part of the first rotation plate 51 (specifically, part of the wire connection part 56) is inserted in the hole 47 of the support plate 14c. Furthermore, the auxiliary spring 67 is inserted in the hole 48 of the support plate 14c. Also, part of the second rotation plate 52 is inserted in the hole 48.

Accordingly, by the amount of overlap between the first rotation plate 51 and the support plate 14c, the power unit 13 can be downsized in the width direction (shaft direction of the push shaft 39, right and left direction in this embodiment). Also, by the amount of overlap between the auxiliary spring 67 and the support plate 14c, the power unit 13 can be downsized. Furthermore, by the amount of overlap between the second rotation plate 52 and the support plate 14c, the power unit 13 can be downsized. In the present embodiment, the power unit 13 is "transversely mounted" as we call it, and the width direction of the power unit 13 corresponds with the vehicle width direction. Therefore, downsizing of the motorcycle 1 can be promoted.

According to the present embodiment, as seen from the shaft direction of the push shaft 39, the first hole 47 and the second hole of the support plate 14c are located opposite from each other while having the push shaft 39 in between.

Accordingly, as compared to the case where both of the holes 47, 48 are arranged on one side in a concentrated manner, rigidity of the support plate 14c can be enhanced.

The clutch operation-assisting device 70 in the present embodiment includes the cam mechanism of ball cam type that slides the push shaft 39 in accordance with the rotation of the first rotation plate 51. Specifically, the clutch operation-assisting device 70 includes the cam plate 41 that slides in the shaft direction together with the push shaft 39. The cam plate 41 is provided with a cam surface 41b, which extends in the orthogonal direction to the push shaft 39 and has a cam groove 62. On the other hand, in the first rotation plate 51, the cam groove 61 is formed, and also a cam surface 51a, which faces against the cam surface 41b of the cam plate 41, is formed. The clutch operation-assisting device 70 is arranged between the cam groove 62 of the cam plate 41 and the cam groove 61 of the first rotation plate 51, and includes the ball 60 that slides the cam plate 41 in the shaft direction of the push shaft 39 in accordance with the rotation of the first rotation plate 51.

According to the clutch operation-assisting device 70 in the present embodiment, the first rotation plate 51 itself, which is connected to the clutch wire 43, functions as a cam plate. Thus, a pair of cam plates, which constitutes the cam mechanism of ball cam type, is not necessarily disposed separately. Therefore, also in this point, downsizing of the power unit 13 in the width direction can be achieved. Also, downsizing of the vehicle can be promoted.

In the present embodiment, the cam plate 41 is disposed at the outside end of the push shaft 39, and the first rotation plate 51 is arranged more inside than the cam plate 41.

According to the present embodiment, the first rotation plate 51 is arranged more inside than the ball 60. Therefore, the first rotation plate 51 can be arranged more inside, and downsizing of the power unit 13 can be promoted. Also, by arranging the first rotation plate 51 more inside, the second rotation plate 52 can be arranged more inside.

According to the present embodiment, the first gear teeth 57a are formed in the first rotation plate 51. And, the second gear teeth 52a, which engages with the first gear teeth 57a within the surface orthogonal to the push shaft 39, is formed in the second rotation plate 52. That is, the first rotation plate 51 and the second rotation plate 52 are connected by gear.

Accordingly, the first rotation plate 51 and the second rotation plate 52 rotate within the same surface. Therefore, the entire length in the shaft direction of the first rotation plate 51 and the second rotation plate 52 is shortened. Therefore, downsizing of the power unit 13 in the width direction can be promoted.

The first rotation plate 51 and the second rotation plate 52 may be connected by a cam mechanism or the like, of course. Connection embodiment between the first rotation plate 51 and the second rotation plate 52 is not limited to an example of the present embodiment.

Downsizing of the bearing member 90, which is used to support the second rotation plate 52 in the present embodiment, is intended to be achieved by being supported by the bolts 91a, 91b in relation to the support plate 14c, and by forming a bearing mechanism. The rotational direction of the second rotation plate is maintained in a surface that is orthogonal to the shaft direction (pivot shaft 65) of the bearing member 90. Thus, torque from the first rotation plate is transmitted accurately.

The clutch operation-assisting device 70 according to the present embodiment includes a countervailing spring 83 that provides the urging force to countervail the urging force of the auxiliary spring 67 added to the first rotation plate 51 when the clutch lever 9 is in the returning position.

Accordingly, loads required for the initial operation of the clutch lever 9 can be reduced, and operability of the clutch lever 9 can be improved.

In the embodiment described above, the clutch operation-assisting device according to the present invention is applied to a motorcycle. However, the clutch operation-assisting device according to the present invention can be applied to straddle type vehicles other than motorcycles.

In the embodiment described above, one part 51b of the first rotation plate 51 is bent so that the teeth 57a of the gear part 57 is located more inside than the center part 55. However, the first rotation plate 51 is acceptable as long as the teeth 57a of the gear part 57 are located more inside than the center part 55. This may be achieved by curving the rotation plate 51, without the use of a defined bend.

In the present invention, the pressure plate means the member that press-fits the friction plate of the friction clutch and the clutch plate. The pressure plate is not limited to the plate shape.

The clutch spring is not limited to a diaphragm spring, but can be other kinds of spring such as a coil spring.

In the embodiment described above, the push shaft 39 corresponds to the "sliding member" of the present invention. However, the sliding member is not limited to the push shaft 39. Any member is acceptable as long as it rotatably supports the pressure plate 37 and slides in the predetermined direction together with the pressure plate 37. The sliding member may be a single member or a combination of two or more members.

In the embodiment described above, as seen from the sliding direction of the sliding member (=shaft direction of the push shaft 39), the rotation center of the first rotation member (first rotation plate 51) and the rotation center of the pressure plate 37 are the same. However, these may be deviated. In that case, for example, a seesaw-like member may be disposed between the cam plate 41 and the push shaft 39. Accordingly, a sliding member can be slid by rotating the first rotation member along with the transmission member. For a mechanism to slide the sliding member, any type is acceptable as long as it includes the first rotation member.

"Transmission member" in the present invention is not limited to the wire shape, but may be the rod shape.

"Auxiliary elastic member" in the present invention is not limited to the coil spring, but may be other elastic member such as a gas spring.

In the embodiment described above, the first rotation plate 51 and the second rotation plate 52 are connected by gear. However, the first rotation plate 51 and the second rotation plate 52 may be connected by other engagement embodiment such as link connection.

As described above, the present invention is useful for the clutch operation-assisting device that reduces the operation force of the friction clutch, and useful for the power unit and the straddle type vehicle including the same.

### Description of Reference Numerals and Symbols

- 1: motorcycle (straddle-type vehicle)
- 9: clutch lever (operation element)
- 13: power unit
- 14: crankcase (casing)
- 14c: support plate
- 30: friction clutch
- 37: pressure plate
- 38: clutch spring
- 39: push shaft (sliding member)
- 39a: rotation center of pressure plate
- 43: clutch wire (transmission member)
- 51: first rotation plate (first rotation member)
- 52: second rotation plate (second rotation member)
- 54: spring unit (auxiliary elastic member)
- 55: center part (rotation center part)
- 57a: teeth (connection part)
- 65: rotation center of bearing member (pivot shaft)
- 67: auxiliary spring
- 70: clutch operation-assisting device
- 90: bearing
- 90a: ball bearing

## Claims

1. A clutch operation-assisting device (70) adapted to be positioned between a clutch operating element (9) and a friction clutch (30) having a pressure plate (37) and a clutch spring (38) for urging the pressure plate (37) towards an engaged configuration, the clutch operation-assisting device (70) comprising:
a sliding member (39) adapted to rotatably support the pressure plate (37) and slide in a predetermined direction together with the pressure plate (37);
a first rotation member (51) adapted to be coupled to the clutch operating element (9) via a transmission member (43), wherein the first rotation member (51) rotates in accordance with the transmission member (43) to cause the sliding member (39) to slide;
a support plate (14c) that rotatably supports the first rotation member (51);
an elastic member (54) adapted to apply an urging force along a line of expansion/contraction on the first rotation member (51), **characterised in that** the expansion/contraction direction of the elastic member (54) does not pass through a rotation center of the pressure plate (37);
a second rotation member (52) arranged to transmit the urging force of the elastic member (54) to the first rotation member (51); and
a bearing member (90) supported by the support plate (14c), and arranged to rotatably support the second rotation member (52).

2. The clutch operation-assisting device (70) according to Claim 1, wherein the bearing member (90) and the support plate (14c) are integrally formed.

3. The clutch operation-assisting device (70) according to Claim 1, wherein the bearing member (90) and the support plate (14c) are separately formed.

4. The clutch operation-assisting device (70) according to any preceding Claim, wherein said device (70) is adapted to be housed in a casing (14) of a power unit (13).

5. The clutch operation-assisting device (70) according to Claim 4, wherein the casing (14) has a cover (14b) that covers the first rotation member (51), the support plate (14c), the elastic member (54), and the bearing member (90) from the outside.

6. The clutch operation-assisting device (70) according to any preceding Claim, wherein the first rotation member (51) has a rotation center part (55) supported by the support plate (14c), and a connection part (57a) connected to the second rotation member (52).

7. The clutch operation-assisting device (70) according to Claim 6, wherein part of the first rotation member (51) is bent so that the connection part (57a) is located more inside than the rotation center part (55).

8. The clutch operation-assisting device (70) according to any preceding Claim, wherein the bearing member (90) supports the second rotation member (52) from the outside.

9. The clutch operation-assisting device (70) according to any preceding Claim, wherein the bearing member (90) comprises a ball bearing (90a).

10. A power unit (13) for a vehicle (1) comprising:
a friction clutch (30) having a pressure plate (37) and a clutch spring (38) for urging the pressure plate (37), wherein the friction clutch (30) is connected via a transmission member (43) to an operation element (9);
a sliding member (39) arranged to rotatably support the pressure plate (37) and slide in a predetermined direction together with the pressure plate (37);
a first rotation member (51) adapted to be coupled to the clutch operating element (9) via a transmission member (43), wherein the first rotation member (51) rotates in accordance with the transmission member (43) to cause the sliding member (39) to slide;
a support plate (14c) that rotatably supports the first rotation member (51);
an elastic member (54) adapted to apply an urging force along a line of expansion/contraction on the first rotation member (51), wherein the expansion/contraction direction of the elastic member (54) does not pass through a rotation center of the pressure plate (37);
a second rotation member (52) arranged to transmit the urging force of the auxiliary elastic member (54) to the first rotation member (51);
a bearing member (90) supported by the support plate (14c) and arranged to rotatably support the second rotation member (52); and
a casing (14) that houses the friction clutch (30), the sliding member (39), the first rotation member (51), the support plate (14c), the elastic member (54), the second rotation member (52), and the bearing member (90).

11. A vehicle (1) comprising a power unit (13) according to Claim 10.

## Patentansprüche

1. Hilfsvorrichtung (70) zur Betätigung einer Kupplung, die so ausgebildet ist, dass sie zwischen einem Kupplungsbetätigungselement (9) und einer Reibungskupplung (30) mit einer Druckplatte (37) und einer Kupplungsfeder (38) für das Treiben der Druckplatte (37) in Richtung einer Eingriffskonfiguration positioniert ist, wobei die Hilfsvorrichtung (70) zur Betätigung einer Kupplung aufweist:
ein Gleitelement (39), das so ausgebildet ist, dass es drehbar die Druckplatte (37) trägt und sich in einer vorgegebenen Richtung zusammen mit der Druckplatte (37) verschiebt;
ein erstes Rotationselement (51), das so ausgebildet ist, dass es mit dem Kupplungsbetätigungselement (9) mittels eines Übertragungselementes (43) verbunden wird, wobei sich das erste Rotationselement (51) in Übereinstimmung mit dem Übertragungselement (43) dreht, um das Verschieben des Gleitelementes (39) zu bewirken;
eine Trägerplatte (14c), die drehbar das erste Rotationselement (51) trägt;
ein elastisches Element (54), das so ausgebildet ist, dass es eine Treibkraft längs einer Linie der Expansion/Zusammenziehung auf das erste Rotationselement (51) anwendet, **dadurch gekennzeichnet, dass** die Expansions/Zusammenziehungsrichtung des elastischen Elementes (54) nicht durch einen Rotationsmittelpunkt der Druckplatte (37) verläuft;
ein zweites Rotationselement (52), das angeordnet ist, um die Treibkraft des elastischen Elementes (54) auf das erste Rotationselement (51) zu übertragen; und
ein Lagerelement (90), das von der Trägerplatte (14c) getragen wird, und das angeordnet ist, um das zweite Rotationselement (52) drehbar zu tragen.

2. Hilfsvorrichtung (70) zur Betätigung einer Kupplung nach Anspruch 1, bei der das Lagerelement (90) und die Trägerplatte (14c) zusammenhängend ausgebildet sind.

3. Hilfsvorrichtung (70) zur Betätigung einer Kupplung nach Anspruch 1, bei der das Lagerelement (90) und die Trägerplatte (14c) separat ausgebildet sind.

4. Hilfsvorrichtung (70) zur Betätigung einer Kupplung nach einem der vorhergehenden Ansprüche, bei der die Vorrichtung (70) so ausgebildet ist, dass sie in einem Gehäuse (14) einer Antriebsgruppe (13) untergebracht wird.

5. Hilfsvorrichtung (70) zur Betätigung einer Kupplung nach Anspruch 4, bei der das Gehäuse (14) einen Deckel (14b) aufweist, der das erste Rotationselement (51), die Trägerplatte (14c), das elastische Element (54) und das Lagerelement (90) nach außen abdeckt.

6. Hilfsvorrichtung (70) zur Betätigung einer Kupplung nach einem der vorhergehenden Ansprüche, bei der das erste Rotationselement (51) ein Rotationsmittelteil (55), das von der Trägerplatte (14c) getragen wird, und ein Verbindungsteil (57a) aufweist, das mit dem zweiten Rotationselement (52) verbunden ist.

7. Hilfsvorrichtung (70) zur Betätigung einer Kupplung nach Anspruch 6, bei der ein Teil des ersten Rotationselementes (51) so gebogen ist, dass das Verbindungsteil (57a) mehr nach innen angeordnet ist als das Rotationsmittelteil (55).

8. Hilfsvorrichtung (70) zur Betätigung einer Kupplung nach einem der vorhergehenden Ansprüche, bei der das Lagerelement (90) das zweite Rotationselement (52) außerhalb trägt.

9. Hilfsvorrichtung (70) zur Betätigung einer Kupplung nach einem der vorhergehenden Ansprüche, bei der das Lagerelement (90) ein Kugellager (90a) aufweist.

10. Antriebsgruppe (13) für ein Fahrzeug (1), die aufweist:
eine Reibungskupplung (30) mit einer Druckplatte (37) und einer Kupplungsfeder (38) für das Treiben der Druckplatte (37), wobei die Reibungskupplung (30) mittels eines Übertragungselementes (43) mit einem Betätigungselement (9) verbunden ist;
ein Gleitelement (39), das so angeordnet ist, dass es drehbar die Druckplatte (37) trägt und sich in einer vorgegebenen Richtung zusammen mit der Druckplatte (37) verschiebt;
ein erstes Rotationselement (51), das so ausgebildet ist, dass es mit dem Kupplungsbetätigungselement (9) mittels eines Übertragungselementes (43) verbunden wird, wobei sich das erste Rotationselement (51) in Übereinstimmung mit dem Übertragungselement (43) dreht, um das Verschieben des Gleitelementes (39) zu bewirken;
eine Trägerplatte (14c), die drehbar das erste Rotationselement (51) trägt;
ein elastisches Element (54), das so ausgebildet ist, dass es eine Treibkraft längs einer Linie der Expansion/Zusammenziehung auf das erste Rotationselement (51) anwendet, wobei die Expansions/Zusammenziehungsrichtung des elastischen Elementes (54) nicht durch einen Rotationsmittelpunkt der Druckplatte (37) verläuft;
ein zweites Rotationselement (52), das angeordnet ist, um die Treibkraft des elastischen Hilfselementes (54) auf das erste Rotationselement (51) zu übertragen;
ein Lagerelement (90), das von der Trägerplatte (14c) getragen wird, und das angeordnet ist, um das zweite Rotationselement (52) drehbar zu tragen; und
ein Gehäuse (14), das die Reibungskupplung (30), das Gleitelement (39), das erste Rotationselement (51), die Trägerplatte (14c), das elastische Element (54), das zweite Rotationselement (52) und das Lagerelement (90) aufnimmt.

11. Fahrzeug (1), das eine Antriebsgruppe (13) nach Anspruch 10 aufweist.

## Revendications

1. Dispositif d'assistance opérationnelle d'un embrayage (70), adapté pour être positionné entre un élément opérationnel de l'embrayage (9) et un embrayage à fiction (30), comportant un plateau d'embrayage (37) et un ressort d'embrayage (38), pour pousser le plateau d'embrayage (37) vers une configuration engagée, le dispositif d'assistance opérationnelle de l'embrayage (70), comprenant :
un élément coulissant (39), adapté pour supporter de manière rotative le plateau d'embrayage (37) et pour glisser dans une directionprédéterminée, ensemble avec le plateau d'embrayage (37) ;
un premier élément de rotation (51), adapté pour être accouplé à l'élément opérationnel de l'embrayage (9) par l'intermédiaire d'un élément de transmission (43), le premier élément de rotation (51) tournant en fonction de l'élément de transmission (43) pour entraîner le glissement de l'élément coulissant (39) ;
une plaque de support (14c), supportant de manière rotative le premier élément de rotation (51) ;
un élément élastique (54), adapté pour appliquer une force de poussée le long d'une ligne d'extension/de contraction au premier élément de rotation (51), **caractérisé en ce que** la direction d'extension/de contraction de l'élément élastique (54) ne passe pas à travers un centre de rotation du plateau d'embrayage (37) ;
un deuxième élément de rotation (52), destiné à transmettre la force de poussée de l'élément élastique (54) vers le premier élément de rotation (51) ; et
un élément de palier (90), supporté par la plaque de support (14c) et destiné à supporter de manière rotative le deuxième élément de rotation (52).

2. Dispositif d'assistance opérationnelle d'un embrayage (70) selon la revendication 1, dans lequel l'élément de palier (90) et la plaque de support (14c) sont formés d'une seule pièce.

3. Dispositif d'assistance opérationnelle d'un embrayage (70) selon la revendication 1, dans lequel l'élément de palier (90) et la plaque de support (14c) sont formés séparément.

4. Dispositif d'assistance opérationnelle d'un embrayage (70) selon l'une quelconque des revendications précédentes, dans lequel ledit dispositif (70) est adapté pour être logé dans un carter (14) d'une unité de puissance (13).

5. Dispositif d'assistance opérationnelle d'un embrayage (70) selon la revendication 4, dans lequel le carter (14) comprend un couvercle (14b) recouvrant le premier élément de rotation (51), la plaque de support (14c), l'élément élastique (54) et l'élément de palier (90) à partir de l'extérieur.

6. Dispositif d'assistance opérationnelle d'un embrayage (70) selon l'une quelconque des revendications précédentes, dans lequelle premier élément de rotation (51) comporte une partie centrale de rotation (55) supportée par la plaque de support (14c), et une partie de connexion (57a) connectée au deuxième élément de rotation (52).

7. Dispositif d'assistance opérationnelle d'un embrayage (70) selon la revendication 6, dans lequel une partie du premier élément de rotation (51) estfléchie, de sorte que la partie de connexion (57a) est agencée davantage vers l'intérieur que la partie centrale de rotation (55).

8. Dispositif d'assistance opérationnelle d'un embrayage (70) selon l'une quelconque des revendications précédentes, dans lequel l'élément de palier (90) supporte le deuxième élément de rotation (52) à partir de l'extérieur.

9. Dispositif d'assistance opérationnelle d'un embrayage (70) selon l'une quelconque des revendications précédentes, dans lequel l'élément de palier (90) comprend un roulement à billes (90a).

10. Unité de puissance (13) pour un véhicule (1), comprenant :
un embrayage à friction (30) comportant un plateau d'embrayage (37) et un ressort d'embrayage (38) pour pousser le plateau d'embrayage (37), l'embrayage à friction (30) étant connecté par l'intermédiaire d'un élément de transmission (43) à un élément opérationnel (9) ;
un élément coulissant (39), destiné à supporter de manière rotative le plateau d'embrayage (37) et pour glisser dans une direction prédéterminée, ensemble avec le plateau d'embrayage (37) ;
un premier élément de rotation (51), adapté pour être accouplé à l'élément opérationnel de l'embrayage (9) par l'intermédiaire d'un élément de transmission (43), le premier élément de rotation (51) tournant en fonction de l'élément de transmission (43) pour entraîner le glissement de l'élément coulissant (39) ;
une plaque de support (14c), supportant de manière rotative le premier élément de rotation (51) ;
un élément élastique (54), adapté pour appliquer une force de poussée le long d'une ligne d'extension/de contraction au premier élément de rotation (51), **caractérisé en ce que** la direction d'extension/de contraction de l'élément élastique (54) ne passe pas à travers un centre de rotation du plateau d'embrayage (37) ;
un deuxième élément de rotation (52), destiné à transmettre la force de poussée de l'élément élastique (54) vers le premier élément de rotation (51) ;
un élément de palier (90), supporté par la plaque de support (14c) et destiné à supporter de manière rotative le deuxième élément de rotation (52) ; et
un carter (14), recevant l'embrayage à friction (30), l'élément coulissant (39), le premier élément de rotation (51), la plaque de support (14c), l'élément élastique (54), le deuxième élément de rotation (52) et l'élément de palier (90).

11. Véhicule (1), comprenant une unité de puissance (13) selon la revendication 10.
